# EUROPÄISCHE PATENTSCHRIFT

(11) **EP 3 332 628 B1**
(45) Veröffentlichungstag und Bekanntmachung des Hinweises auf die Patenterteilung: **14.10.2020**
(21) Anmeldenummer: 17206609.4
(22) Anmeldetag: 12.12.2017
(51) Int. Cl.: A01D 84/02, A01D 43/04

(54) **LANDWIRTSCHAFTLICHE ARBEITSMASCHINE**
AGRICULTURAL MACHINE
ENGIN AGRICOLE

(30) Priorität: 12.12.2016 DE 202016007555 U
(43) Veröffentlichungstag der Anmeldung: 13.06.2018
(73) Patentinhaber: PÖTTINGER Landtechnik GmbH, 4710 Grieskirchen (AT)
(72) Erfinder: Gadermayr, Andreas, 4751 Dorf a. d. Pram (AT)
(74) Vertreter: Thoma, Michael

(56) Entgegenhaltungen:
- DE-A1- 3 047 878
- GB-A- 1 274 372
- US-A- 4 148 176
- US-A- 4 149 364

## Beschreibung

Die vorliegende Erfindung betrifft eine landwirtschaftliche Arbeitsmaschine, insbesondere in Form einer Heuwerbungsmaschine zum Anbau an einen Schlepper, mit zumindest einem Arbeitsaggregat zum Bearbeiten landwirtschaftlichen Guts sowie einem Prallschild zum Begrenzen des Abwurf- und/oder Ablege- und/oder Streubereichs des vom Arbeitsaggregat bearbeiteten Guts, wobei das Prallschild zwischen einer Arbeitsstellung und einer Transport- und/oder Vorgewendestellung verbringbar ausgebildet ist.

Bei Heuwerbungsmaschinen in Form von bspw. Mergern oder Querförderern, wie sie hinter Mähwerken verwendet werden können, oder Schwadern werden Schwadbleche oder Schwadtücher verwendet, um das vom Arbeitsrotor oder - aggregat bearbeitete Erntegut sauber in einem Schwad abzulegen und zu verhindern, dass bei hoher Rotordrehzahl oder hohen Förderbandgeschwindigkeiten Erntegut zu weit seitlich weggeschleudert wird. Ähnliche Prallschilde werden bei Zettern verwendet, um den Streu- bzw. Abwurfbereich der Zetterkreisel zu begrenzen. Auch bei Bodenbearbeitungsgeräten wie Kreiseleggen können ähnliche Prallschilde bzw. -elemente zum Einsatz kommen, um das Wegschleudern von Steinen, Erdklumpen oder ähnlichem Gut durch die Eggenzinken zu verhindern.

Solche Prallschilde können üblicherweise aus der bodennahen Arbeitsstellung in eine Vorgewende- und/oder Transportstellung verbracht werden, um die Abmessungen der Maschine zu verkleinern und den Verkehrsvorschriften gerecht zu werden. Je nach Ausbildung der Maschine kann es hierbei um die Arbeitsbreite gehen, insbesondere wenn bei Kreiselschwadern oder Mergern das Schwadblech seitlich auskragend neben dem Arbeitsrotor oder Förderband angeordnet ist. Zum anderen dient das Verbringen des Prallschilds in eine Vorgewende- und/oder Transportstellung auch der Vergrößerung der Bodenfreiheit. Da die Prallschilde in der Arbeitstellung meist dicht über dem Boden laufen, um zu verhindern, dass Gut unter dem Schild hindurchstreut, müssen die Prallschilde für das Vorgewende oder den Straßentransport angehoben werden. Je nach Ausbildung der Arbeitsmaschine und Anordnung des Prallschilds kann das Prallschild automatisch mit ausgehoben werden, wenn das Arbeitsaggregat angehoben wird, während ein separates Anheben des Prallschilds erforderlich ist, wenn das Prallschild nicht am auszuhebenden Abschnitt des Arbeitsaggregats befestigt ist.

Üblicherweise können die Prallschilde in die genannte Transport- und/oder Vorgewendestellung weggeschwenkt werden, wobei die Prallschilde auch über Gestänge oder Lenkeranordnungen angelenkt sein können, um den Prallschild beim Verschwenken in die Transportstellung in einer bestimmten Ausrichtung zu halten bzw. in eine bestimmte Ausrichtung zu verbringen. Solche schwenkbar aufgehängten Prallschilde zeigen bspw. die Schriften EP 0 845 199 B1, EP 2 756 749 A1, DE 20 2013 002 236 U1, DE 20 2010 006 406 U1, US 4,149,364 A und insbesondere die GB 1 274 372 A, die eine landwirtschaftliche Arbeitsmaschine nach dem Oberbegriff des Anspruchs 1 offenbart.

Die vorbekannten Prallschild-Aufhängungen überstreichen mit ihrem Lenkergestänge beim Verschwenken in die Transportstellung jedoch einen relativ großen Raum und benötigen oberhalb ihrer Arbeitsposition und oberhalb des Arbeitsaggregats relativ viel Platz, da die Prallschilde üblicherweise in eine Transportstellung oberhalb des Arbeitsaggregats verfahren werden, um die Maschinenbreite für den Straßentransport zu reduzieren, der durch das seitliche Auskragen in der Arbeitsstellung benötigt wird.

Bei einigen Maschinentypen ist der Platz oberhalb der Arbeitsstellung des Prallschilds und auch oberhalb des Arbeitsaggregats recht begrenzt, zumindest wenn das Arbeitsaggregat im Vorgewende bzw. zum Transport ebenfalls angehoben wird. Dies ist bspw. bei sogenannten Butterfly-Geräten der Fall, bei denen zwei Arbeitsaggregate nebeneinander angeordnet und der Prallschild zwischen den beiden Arbeitsaggregaten angeordnet ist. Solche Butterfly-Geräte können bspw. Heuwerbungsmaschinen wie Schwader sein, bei denen zwei Schwadkreisel rechts und links auskragend an einem zentralen Maschinenrahmen mittels Schwenkarmen gelagert sind, sodass die Schwadkreisel im Vorgewende und für den Transport nach oben geschwenkt werden können. In ähnlicher Weise können solche Butterfly-Geräte aber auch Mähmaschinen mit zwei rechts und links auskragend angeordneten Mähaggregaten sein, denen bspw. Querförderer und/oder Konditionierer nachgeordnet sein können, zwischen denen dann ein Prallschild der genannten Art vorgesehen sein kann. Beispielsweise kann der Prallschild in der Arbeitsposition etwa mittig zwischen Querförderbändern oder Umlaufrechen angeordnet sein, mittels derer das gemähte Erntegut quergefördert und mittig am Prallschild abgelegt wird.

Bei solchen Doppel- bzw. Butterfly-Geräten mit einem Prallschild im zentralen Mittelbereich zwischen den seitlichen Arbeitsaggregaten ist der Platz über dem Prallschild recht beschränkt. Zum einen fahren die Arbeitsaggregate selbst aufeinander zu und mittig zusammen, wenn sie nach oben in ihre Transportposition geschwenkt werden. Zum anderen erstreckt sich der zentrale Maschinenrahmen selbst in dem Mittelbereich zwischen den seitlich angeordneten Arbeitsaggregaten, sodass für den Prallschild nicht mehr viel Platz verbleibt, insbesondere nicht für den Raum, den die Lenkeranordnung überstreicht, wenn der Prallschild aus seiner Arbeitsstellung in die Vorgewende- bzw. Transportstellung verbracht werden soll.

Der vorliegenden Erfindung liegt daher die Aufgabe zugrunde, eine verbesserte landwirtschaftliche Arbeitsmaschine zu schaffen, die Nachteile des Standes der Technik vermeidet und letzteren in vorteilhafter Weise weiterbildet. Insbesondere soll ein verbesserter Prallschild geschaffen werden, der sich platzsparend in seine Vorgewende- und/oder Transportstellung verbringen lässt, ohne hierfür komplexe und teure Aufhängungskonstruktionen und Stellantriebe zu benötigen.

Erfindungsgemäß wird die genannte Aufgabe durch eine landwirtschaftliche Arbeitsmaschine gemäß Anspruch 1 gelöst. Bevorzugte Ausgestaltungen der Erfindung sind Gegenstand der abhängigen Ansprüche.

Es wird also vorgeschlagen, den Prallschild selbst in sich zusammenzufahren, um für das Vorgewende und den Straßentransport die notwendige Bodenfreiheit zu schaffen und die Verkehrsvorschriften einhalten zu können. Der Prallschild verkleinert sozusagen seine Abmessungen bzw. die vom aufgespannte Prallfläche in der Vorgewende- und/oder Transportstellung gegenüber der Arbeitsstellung und braucht nicht mehr als Ganzes bzw. mit den sperrigen Abmessungen, die der Prallschild in der Arbeitsstellung einnimmt, weggeschwenkt werden. Wenn der Prallschild gleichwohl zusätzlich über ein Gestänge oder eine andere bewegliche Aufhängung aus der Arbeitsstellung in eine andere Vorgewende- und/oder Transportstellung verschoben und/oder verschwenkt wird, kann der überstrichene Raum durch das Zusammenfahren des Prallschilds selbst verkleinert werden.

Erfindungsgemäß ist der Prallschild in mehrere Schildsegmente unterteilt, die relativ zueinander beweglich gelagert sind derart, dass die Schildsegmente aus der Arbeitsstellung, in der die Schildsegmente nebeneinanderliegend gemeinsam eine Prallfläche bilden, durch Relativbewegung zueinander in die Transport- und/oder Vorgewendestellung zusammenfahrbar sind. Der Prallschild hat also in seiner Arbeitsstellung einerseits und seiner Vorgewende- und/oder Transportstellung andererseits unterschiedliche Formen und/oder Abmessungen, insbesondere wird die von den Schildsegmenten aufgespannte Prallfläche verkleinert, wenn die Schildsegmente relativ zueinander in die Vorgewende- und/oder Transportstellung zusammengefahren werden. Der Korpus des Prallschilds und dessen Außenabmessungen sind in der Vorgewende- und/oder Transportstellung kompakter als in der Arbeitsstellung, der Prallschild wird flächenmäßig schlanker bzw. kleiner.

Der Prallschild kann dabei in verschiedener Weise segmentiert sein. Beispielsweise können die Schildsegmente Flächenstücke in geometrischen Grundformen wie Rechteck, Dreieck oder Sechseck, oder auch Flächenstücke mit unregelmäßigen oder freigeformten Umrisskonturen nach Art von Puzzleelementen umfassen, welche Flächenstücke sich gegenseitig ergänzen, um gemeinsam eine Prallfläche zu bilden.

Insbesondere können die Schildsegmente in Form länglicher Stäbe ausgebildet sein, die in der Arbeitsstellung des Prallschilds nebeneinander aufgereiht sind und ein Gitter bzw. einen Kamm bilden. Der Prallschild kann also als Stabgitter bzw. Stabkamm ausgebildet sein, dessen Stäbe sich in eine zusammengefahrene Vorgewende- und/oder Transportstellung verbringen lassen. In der Arbeitsstellung können die genannten Stäbe voneinander beabstandet und vorteilhafterweise näherungsweise parallel zueinander ausgerichtet sein und gemeinsam eine Hüllfläche definieren, die die vorgenannte Prallfläche bildet. Die Stäbe können dabei in einer gemeinsamen Ebene angeordnet sein, sodass sich eine ebene Prallfläche ergibt, wenn die Stäbe in ihrer Arbeitsstellung sind. Grundsätzlich wäre es aber auch möglich, die Stäbe entlang einer gebogenen Hüllfläche anzuordnen, die senkrecht zu den parallelen Stäben eine Krümmung aufweisen kann. Alternativ oder zusätzlich können die Stäbe auch verschränkt zueinander sein und/oder in der Arbeitsstellung nicht parallel zueinander ausgerichtet sein, bspw. in einer sich überkreuzenden Anordnung, wie sie per se bspw. bei ausziehbaren Réchauds bzw. Topfuntersetzern bekannt ist.

Vorteilhafterweise kann eine kammförmige Stabanordnung als Prallschild vorgesehen sein, bei der die Stäbe - zumindest in der Arbeitsstellung - an ihrem oberen Ende angelenkt sind und frei nach unten auskragen, ähnlich wie dies bei Rechen von Schwadkreiseln bekannt ist. Bei solchen frei auskragenden, kammförmigen Stabanordnungen, bei denen die unteren Enden der Stäbe freiliegen, kann sich kein Erntegut verfangen bzw. kann Erntegut nach unten wieder aus den Zwischenräumen zwischen den freien Enden abgestriffen werden.

Die Stäbe bzw. Schildsegmente können dabei in grundsätzlich verschiedener Weise relativ zueinander beweglich gelagert sein. Beispielsweise wäre es möglich, die Stäbe verschieblich zu lagern, sodass sie nach Art eines Vorhangs zusammengeschoben werden können. Erfindungsgemäß sind die Schildsegmente insbesondere schwenkbar gelagert, sodass die Schildsegmente zwischen Arbeitsstellung und Vorgewende- und/oder Transportstellung verschwenkt werden können. Insbesondere können durch eine schwenkbare Lagerung die Schildsegmente in eine kompaktere, flächenmäßig kleinere Vorgewende- und/oder Transportstellung zusammengeschwenkt werden und umgekehrt in die Arbeitsstellung auseinandergeschwenkt werden, in der die Schildsegmente gemeinsam die Prallfläche aufspannen.

Erfindungsgemäß sind die Schildsegmente schwenkbar um Schwenkachsen gelagert, die sich quer zu der in der Arbeitsstellung gebildeten Prallfläche erstrecken, wobei die genannten Schwenkachsen vorteilhafterweise zueinander parallel sein können. Denkbar wäre es jedoch auch, die Schwenkachsen gegeneinander leicht zu verschwenken bzw. windschief auszurichten, um die Schildsegmente in verschiedene Richtungen wegzuschwenken, sodass sie einander nicht im Weg stehen, wenn sie in die Vorgewende- und/oder Transportstellung zusammengeschwenkt werden.

Durch die Erstreckung bzw. Ausrichtung der genannten Schwenkachsen quer zur Prallfläche des Prallschilds in dessen Arbeitsstellung kann der Prallschild sozusagen in sich zusammengeschwenkt werden. Die Schildsegmente können in der Ebene des Prallschilds zusammenklappen, um den Prallschild in seine Vorgewende- und/oder Transportkonfiguration zu verbringen. Hierdurch kann eine besonders kompakte, kleinbauende Transport- bzw. Vorgewendestellung realisiert werden.

In Weiterbildung der Erfindung kann jedes Schildsegment seine eigene Schwenkachse besitzen, wobei es alternativ aber auch möglich wäre, Schildsegmente gruppenweise zusammenzufassen und gruppenweise gemeinsam um eine jeweilige Schwenkachse zu verschwenken. Beispielsweise können zwei oder drei Stäbe zusammengefasst und um eine gemeinsame Schwenkachse verschwenkt werden, sodass bei bspw. 15 Stäben insgesamt fünf Gruppen mit fünf Schwenkachsen vorgesehen sein können, wobei jedoch auch andere gruppenweise Unterteilungen möglich wären. Vorteilhafterweise kann jedoch jeder Stab seine eigene Schwenkachse besitzen, wodurch eine besonders kompakte Transportstellung erzielt werden kann.

Die genannten Schwenkachsen der Schildsegmente können vorteilhafterweise entlang einer geraden oder gebogenen Linie aufgereiht bzw. angeordnet sein, welche Linie sich vorteilhafterweise etwa parallel oder tangential zu einer Hauptachse des Prallschilds in dessen Arbeitsstellung und/oder quer zu dessen Längsachse der Schildsegmente in deren Arbeitsstellung erstrecken kann. Insbesondere können die Schwenkachsen entlang einer liegenden, sich in Fahrtrichtung erstreckenden Linie aufgereiht sein.

Die Schwenkachsen können in vorteilhafter Weiterbildung an Endabschnitten der länglichen Schildsegmente vorgesehen sein, sodass die Schildsegmente um ihre Endabschnitte verschwenkt werden können. Grundsätzlich wäre es auch möglich, die Schwenkachsen bspw. mittig an den Schildsegmenten vorzusehen, sodass diese nach Art einer Kompassnadel verdreht werden können, um für das Verdrehen bzw. Verschwenken möglichst wenig Platz zu benötigen. Insbesondere können die länglichen Stäbe bzw. die Schildsegmente an ihren - bei Betrachtung in Arbeitsstellung - oberen Endabschnitten schwenkbar aufgehängt sein, sodass die Schildsegmente nach oben in die Vorgewende- und/oder Transportstellung geschwenkt werden können. Durch eine solche Lagerung an den oberen Endabschnitten kann - im Vergleich zu der zuvor beschriebenen mittigen Anlenkung - ein besonders großer Gewinn bzgl. der Bodenfreiheit erzielt werden, wenn die Schildsegmente nach oben in die Vorgewende- und/oder Transportstellung geschwenkt werden.

Vorteilhafterweise können die Schildsegmente an einem gemeinsamen Schildträger schwenkbar aufgehängt sein, wobei der genannte Schildträger vorteilhafterweise sich etwa parallel zum Prallschild entlang einem Rand, insbesondere dem oberen Rand des Prallschilds erstrecken kann. Der genannte Schildträger kann hierbei ein Profilträger bspw. nach Art eines Balkens oder eines Rohrs oder eines Kantprofils oder eines Strangprofils ausgebildet sein, an dem die Schildsegmente, insbesondere die genannten Stäbe schwenkbar angelenkt sein können.

Ist das Zusammenfahren des Prallschilds in sich selbst nicht ausreichend, kann der genannte Schildträger selbst verfahrbar an einem Maschinenrahmenteil und/oder dem Arbeitsaggregat angelenkt sein, bspw. mittels einer Schwenklagerung und/oder einem Gestänge und/oder einer Lenkeranordnung, um das zusammengefahrene Prallschild noch weiter nach oben und/oder in eine andere Richtung wegfahren zu können, bspw. um den seitlichen Abstand zu einem Arbeitsaggregat verringern zu können. Beispielsweise kann der genannte Schildträger an einem teleskopierbaren oder verschieblich gelagerten und/oder schwenkbar aufgehängten Tragarm befestigt sein, um den Abstand vom Arbeitsaggregat einstellen und/oder verändern zu können und/oder das Prallschild nach oben und unten verfahren bzw. verschwenken zu können.

Um die Schildsegmente zwischen ihren Arbeits- und Vorgewende- bzw. Transportstellungen verfahren zu können, können die Schildsegmente vorteilhafterweise mit einem gemeinsamen Stellteil gelenkig verbunden sein, das von einem gemeinsamen Stellaktor betätigbar ist. Hierdurch können alle oder zumindest mehrere Schildsegmente durch einen gemeinsamen Stellaktor betätigt werden.

Der genannte Stellteil, an dem die Schildsegmente gemeinsam angelenkt sind, kann vorteilhafterweise als Profilträger ausgebildet sein, der sich im Wesentlichen parallel zu dem Schildträger erstrecken kann, an dem die Schildsegmente gelenkig gelagert sind. Alternativ oder zusätzlich kann der genannte Stellteil etwa parallel zu dem genannten Schildträger und/oder etwa parallel zur Prallfläche des Prallschilds verfahrbar sein, um durch die genannte Verfahrbewegung die Schildsegmente zwischen ihren Arbeits- und Transport- bzw. Vorgewendestellungen hin- und herverfahren zu können.

Insbesondere können das zuvor genannte Stellteil und/oder der zuvor genannte Stellaktor in der Ebene der Prallfläche des Prallschilds und/oder parallel zu der genannten Ebene der Prallfläche des Prallschilds angeordnet sein und/oder verfahrbar sein. Insbesondere können das genannte Stellteil und/oder der genannte Stellaktor parallel entlang einer der Kanten bzw. Ränder des Prallschilds angeordnet sein, wodurch eine besonders kompakte und platzsparende Anordnung erzielt wird.

Der genannte Stellaktor kann bspw. ein Druckmittelzylinder sein, der einerseits an dem genannten Stellteil und andererseits an einem Rahmenteil oder bspw. dem zuvor genannten Schildträger gelenkig angelenkt sein kann, um die Schildsegmente relativ zu dem Schildträger zu verschwenken.

In vorteilhafter Weiterbildung der Erfindung kann das zumindest eine Arbeitsaggregat aus einer abgesenkten Arbeitsstellung in eine angehobene Vorgewende-und/oder Transportstellung ausgehoben werden, bspw. mittels eines Tragarms, der sich bspw. quer zur Fahrtrichtung erstrecken und um eine liegende, in Fahrtrichtung weisende Tragarmachse schwenkbar an einem Rahmen angelenkt sein kann.

In Weiterbildung der Erfindung kann der Stellantrieb zum Zusammenfahren des Prallschilds bzw. zum Verfahren und/oder Verschwenken der Schildsegmente des Prallschilds steuerungstechnisch an die Bewegung des Arbeitsaggregats, die das Arbeitsaggregat zwischen Arbeits- und Transportstellung verbringt, angebunden sein, sodass beim Ausheben des Arbeitsaggregats in dessen Vorgewende-und/oder Transportstellung auch das Prallschild in seine Vorgewende- und/oder Transportstellung zusammengefahren wird.

Vorteilhafterweise kann dabei der Stellaktor zum Zusammenfahren bzw. Verstellen des Prallschilds hydraulisch an den Stellaktor zum Ausheben des Arbeitsaggregats angebunden sein, sodass eine hydraulische Steuerungskoppelung vorgesehen ist. Beispielsweise kann der Stellaktor des Prallschilds und der Stellaktor zum Ausheben des Arbeitsaggregats nach Art einer Master-Slave-Anordnung miteinander hydraulisch verbunden sein. Wird der Aushubzylinder zum Ausheben des Arbeitsaggregats mit Druck beaufschlagt, der zum Ausheben führt, kann der Druck auch auf den Stellaktor des Prallschilds gegeben werden, sodass die Schildsegmente zusammengefahren werden.

Die Erfindung wird nachfolgend anhand eines bevorzugten Ausführungsbeispiels und zugehöriger Zeichnungen näher erläutert. In den Zeichnungen zeigen:
- Fig. 1:: Eine perspektivische, heckseitige Ansicht einer landwirtschaftlichen Arbeitsmaschine in Form einer Mähmaschine mit zugeordneten Mergern bzw. Schwadern, wobei die Arbeitsaggregate in Butterfly-Anordnung rechts und links von einem Maschinenrahmen angeordnet sind, zwischen denen ein Prallschild gemäß einer Ausführung der Erfindung vorgesehen ist,

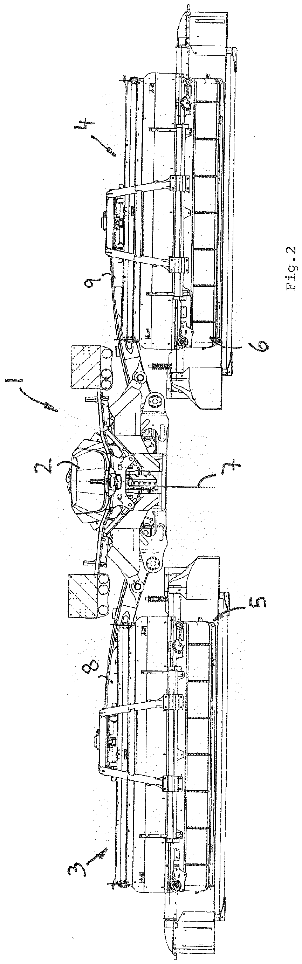

- Fig. 2:: Eine Heckansicht des Anbaugeräts aus Fig. 1, die die mittige, in der Arbeitsstellung aufrechte, fahrtrichtungsparallele Anordnung des Prallschilds zwischen den Querförderbändern der seitlichen Mergereinheiten zeigt,

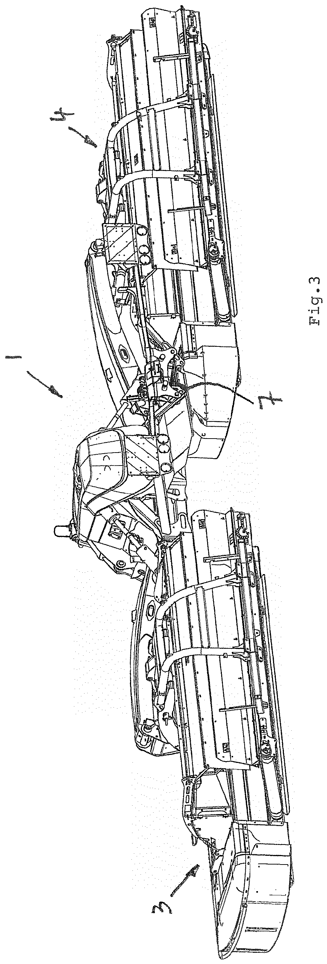

- Fig. 3:: Eine perspektivische, heckseitige Ansicht des Anbaugeräts ähnlich Fig. 1, wobei der Prallschild durch Zusammenfahren seiner Stäbe nach oben in seine Vorgewende- und Transportstellung verfahren ist,
- Fig. 4:: Eine ausschnittsweise, vergrößerte Darstellung des Prallschilds des Anbaugeräts aus den vorhergehenden Figuren, die die Schildsegmente in Form länglicher Stäbe in ihrer ausgefahrenen Arbeitsstellung und deren Aufhängung an einem profilträgerförmigen Schildträger zeigt, und
- Fig. 5:: Eine perspektivische, ausschnittsweise Darstellung des Prallschilds ähnlich Fig. 4, wobei die länglichen Schildsegmente in Form der Stäbe nach oben in ihre Vorgewende- und Transportstellung geschwenkt sind.

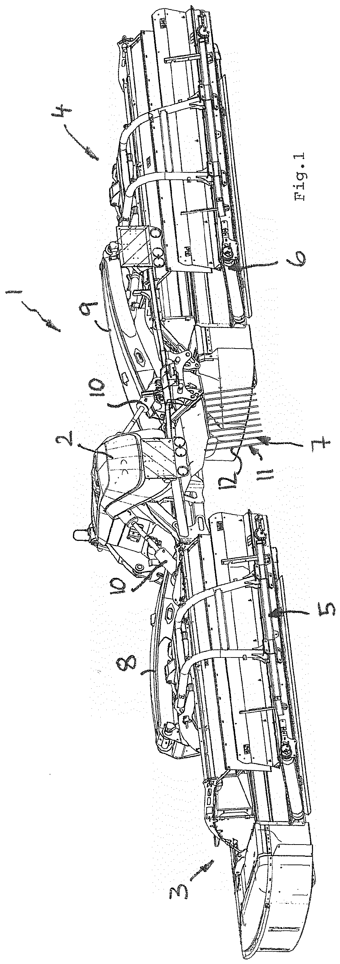

Wie Fig. 1 zeigt, kann die landwirtschaftliche Arbeitsmaschine 1 als Anbaugerät zum Anbau an einen Schlepper ausgebildet sein und einen Maschinenrahmen 2 umfassen, der über einen Anbaubock und eine Dreipunktanlenkung an einem nicht dargestellten Schlepper angebaut werden kann. Grundsätzlich wäre es aber auch möglich, das Anbaugerät als Aufsattelgerät auszubilden, bei dem der Maschinenrahmen über ein eigenes Fahrwerk am Boden abgestützt und über eine Deichsel am Schlepper angebaut ist.

Insbesondere kann die Arbeitsmaschine 1 in Form eines Butterfly-Geräts ausgebildet sein, bei dem zwei Arbeitsaggregate 3 und 4 von dem genannten Maschinenrahmen 2 seitlich rechts und links auskragend angeordnet sind.

Wie die Figuren zeigen, können die Arbeitsaggregate 3 und 4 Mähaggregate umfassen, denen jeweils ein Konditionierer und/oder ein Querförderer nachgeordnet sein kann, wobei als Querförderer 5 und 6 bspw. die in den Zeichnungen gezeigten Querförderbänder vorgesehen sein können. Alternativ können als Querförderer aber auch Querförderschnecken oder umlaufende Bandrechen vorgesehen sein. Alternativ oder zusätzlich können auch Schwadrechen mit um aufrechte Achsen umlaufenden Rechkreiseln vorgesehen sein.

Bei der in den Figuren gezeigten Butterfly-Anordnung können die Querförderer 5 und 6 Erntegut zueinander gegenläufig aufeinander zufördern und in einem Mittelbereich zwischen den beiden Arbeitsaggregaten 3 und 4 ablegen. Um die von rechts und links kommenden Schwadteile nicht miteinander zu überwerfen, ist im Bereich zwischen den Arbeitsaggregaten 3 und 4 ein Prallschild 7 vorgesehen, das sich in seiner Arbeitsstellung, die Fig. 1 zeigt, aufrecht fahrtrichtungsparallel erstreckt und jeweils seitlich beabstandet von den beiden Arbeitsaggregaten 3 und 4 angeordnet ist, wobei der Prallschild 7 insbesondere im Abwurfbereich der Querförderer 5 und 6 angeordnet sein kann bzw. diesen Abwurfbereich begrenzen kann.

Alternativ zu der in den Zeichnungen gezeigten Anordnung ist es jedoch auch möglich, den Prallschild 7 in Verbindung mit nur einem Arbeitsaggregat einzusetzen, wobei der Prallschild dann seitlich neben dem einen Arbeitsaggregat angeordnet ist, um in der genannten Weise den Abwurfbereich des Querförderers zu begrenzen.

Die genannten Arbeitsaggregate 3 und 4 einschließlich ihrer Mähwerkseinheiten und den nachgeordneten Konditionierern oder Querförderern 5 und 6 können bspw. an Tragarmen 8 und 9 aufgehängt sein, die von dem zentralen Maschinenrahmen 2 quer zur Fahrtrichtung auskragend angeordnet sind und bspw. um liegende, in Fahrtrichtung weisende Schwenkachsen nach oben geschwenkt werden können, um die Arbeitsaggregate 3 und 4 aus der in Fig. 1 gezeigten, abgesenkten Arbeitsstellung nach oben in eine Vorgewende- und/oder Transportstellung ausheben zu können. Hierzu können Aushubaktoren 10 bspw. in Form von Druckmittelzylindern vorgesehen sein, die einerseits am Maschinenrahmen 2 und andererseits an einem der Tragarme 8 und 9 angelenkt sein können.

Der zuvor genannte Prallschild 7 kann an dem zentralen Maschinenrahmen 2 aufgehängt sein.

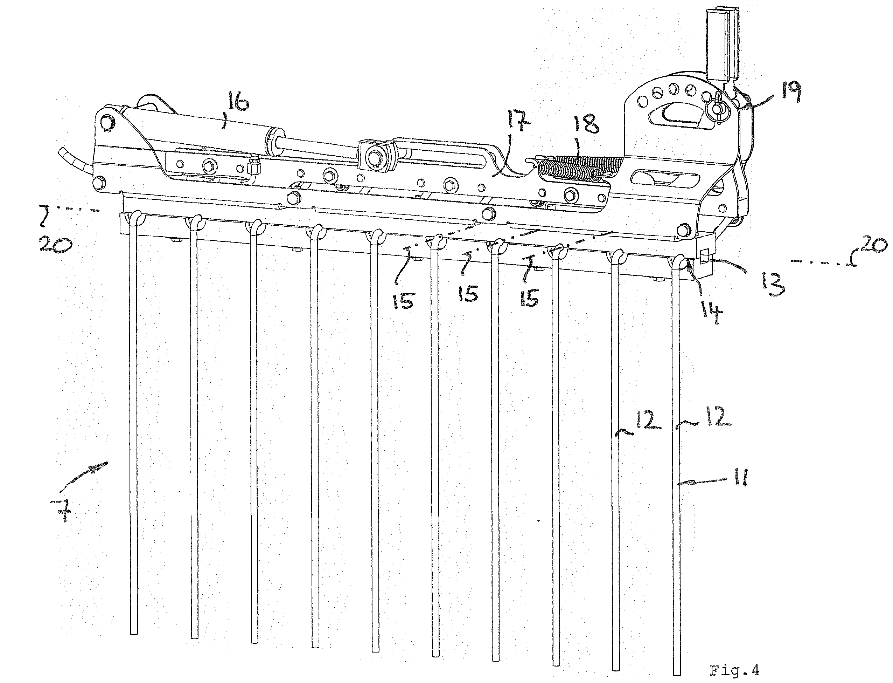

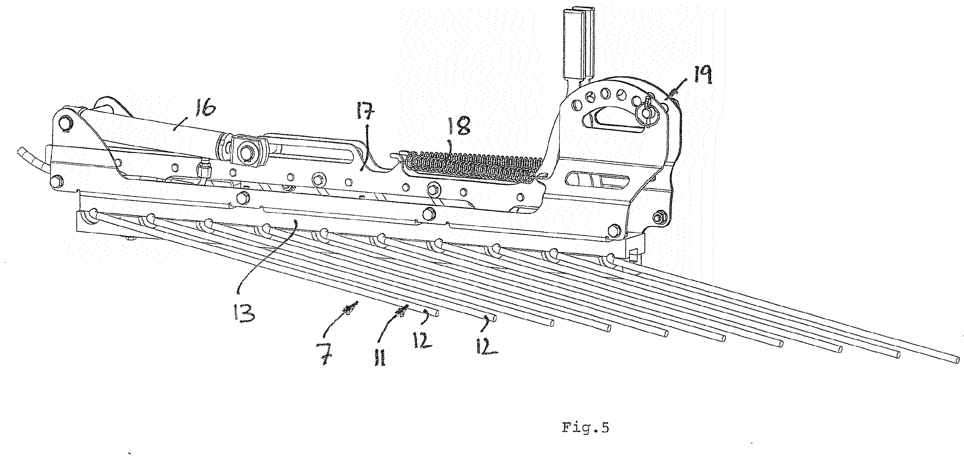

Wie die Figuren 4 und 5 zeigen, kann das Prallschild 7 in mehrere Schildsegmente 11 unterteilt sein, die insbesondere als längliche, zinkenförmige Stäbe 12 ausgebildet sein können. Die genannten Stäbe 12 können dünne, gerade Profilstäbe bilden, die in der Fig. 4 gezeigten Arbeitsstellung nach Art eines Kamms voneinander beabstandet parallel zueinander angeordnet sind.

Insbesondere können die genannten Stäbe 12 mit ihren oberen Endabschnitten an einem profilträgerförmigen Schildträger 13 befestigt sein, der sich liegend näherungsweise fahrtrichtungsparallel erstrecken kann und an dem zentralen Maschinenrahmen 2 starr oder beweglich montiert sein kann.

Insbesondere sind die genannten Stäbe 12 an dem genannten Schildträger 13 jeweils gelenkig gelagert, wobei die Lagergelenke 14 eines jeden Stabs 12 Schwenkachsen 15 besitzen können, die sich liegend quer zur Fahrtrichtung erstrecken können. Die genannte Schwenkachsen 15 können voneinander beabstandet zueinander parallel angeordnet sein und/oder entlang der Längsachse des genannten Schildträgers 13 und/oder einer zumindest näherungsweise fahrtrichtungsparallelen Linie aufgereiht sein.

Wie Fig. 4 zeigt, können die Schildsegmente 11 in Form der Stäbe 12 frei auskragend gelagert sein, wobei insbesondere nur die oberen Endabschnitte gelagert sein können, von denen sich die Schildsegmente frei auskragend erstrecken. Hierdurch kann Erntegut aus den nach unten offenen Zwischenräumen herausfallen und sich nicht an dem Stabgitter bzw. -kamm verfangen.

Wie Fig. 5 zeigt, können die Schildsegmente 11 in Form der Stäbe 12 nach oben in eine Vorgewende- und/oder Transportstellung verschwenkt werden. Die Schildsegmente 11 verfahren hierbei in der Ebene des Prallschilds 7, sodass der Prallschild 7 sozusagen in sich zusammengefahren wird. Während sich die Stäbe 12 in der Arbeitsstellung in aufrechter Ausrichtung erstrecken, können sie in der Transport- und/oder Vorgewendestellung eine liegende Ausrichtung einnehmen, in der sich die Stäbe 12 näherungsweise parallel oder nur leicht spitzwinklig geneigt zu der Linie erstrecken, entlang derer die Schwenkachsen 15 angeordnet sind. Insbesondere können sich die Stäbe 12 näherungsweise parallel oder nur leicht spitzwinklig geneigt zu dem länglichen Schildträger 13 erstrecken, an dem die Stäbe 12 gelenkig aufgehängt sind.

Zur Verstellung der Schildsegmente 11 in Form der Stäbe 12 kann vorteilhafterweise ein Fremdenergie betätigter Stellaktor 16 vorgesehen sein, der einerseits gelenkig an dem Schildträger 13 oder einem damit verbundenen Rahmenteil und andererseits an einem Stellteil 17 angelenkt sein kann, welches Stellteil 17 wiederum mit den Stäben 12 gekoppelt ist. Insbesondere kann das genannte Stellteil 17 mit allen Stäben 12 gelenkig verbunden sein.

Das genannte Stellteil 17 kann ein insgesamt länglicher Träger sein, der sich vorteilhafterweise näherungsweise parallel zu dem Schildträger 13 erstrecken kann. Alternativ oder zusätzlich kann sich auch der Stellaktor 16 näherungsweise parallel zu dem Schildträger 13 erstrecken, sodass eine insgesamt kompakte Anordnung erzielt werden kann.

Der genannte Stellteil 17 ist relativ zu dem Schildträger 13 beweglich,und zwar insbesondere in Längsrichtung des Schildträgers 13 relativ zu diesem verschieblich. Genauer gesagt ist der Stellteil 17 relativ zu dem Schildträger 13 parallel auf einem bogenförmigen Stellweg verschieblich, der durch die Kurbelbewegungen definiert wird, die die Stababschnitte, an denen der Stellteil 17 angelenkt ist, um ihre Schwenkachsen 15 ausführen.

Wie die Figuren 4 und 5 zeigen, kann der Stellteil 17 durch eine Vorspanneinrichtung 18 bspw. in Form einer Federeinrichtung in eine Stellung vorgespannt sein, in der die Stäbe 12 sich in ihrer Arbeitsstellung erstrecken. Durch den genannten Stellaktor 16 kann der Stellteil 17 unter Überwindung der Vorspannkraft und damit die Stäbe 12 in die Vorgewende- bzw. Transportstellung verfahren werden.

Vorteilhafterweise kann eine Sperr- und/oder Riegeleinrichtung 19 vorgesehen sein, mittels derer der Stellteil 17 entgegen der Vorspannkraft der Vorspanneinrichtung 18 in einer vorbestimmten Stellung gehalten werden kann. Die genannte Sperr- und/oder Riegeleinrichtung 19 kann hierbei vorteilhafterweise einstellbar ausgebildet sein, sodass wahlweise die Arbeitsstellung definiert und die Stäbe 12 in ihrer Vorgewende- und/oder Transportstellung gehalten werden können, auch ohne das hierfür der Stellaktor 16 energiebeaufschlagt werden müsste. Beispielsweise kann die Sperr- und/oder Riegeleinrichtung 19 einen versetzbaren Absteckbolzen aufweisen, gegen den der Stellteil 17 als Anschlag anfahren kann, vgl. Fig. 5.

## Patentansprüche

1. Landwirtschaftliche Arbeitsmaschine, insbesondere Mähmaschine mit Querförderer und/oder Heuwerbungsmaschine zum Anbau an einen Schlepper mit zumindest einem Arbeitsaggregat (3,4) zum Bearbeiten landwirtschaftlichen Guts sowie einem Prallschild (7) zum Begrenzen des Abwurf- und/oder Ablege- und/oder Streubereichs des vom Arbeitsaggregat (3,4) bearbeiteten Guts, wobei das Prallschild (7) zwischen einer Arbeitsstellung und einer Transport-und/oder Vorgewendestellung verbringbar ausgebildet ist, wobei das Prallschild (7) in mehrere Schildsegmente (11) unterteilt ist, die relativ zueinander beweglich gelagert sind, derart, dass die Schildsegmente (11) aus der Arbeitsstellung, in der die Schildsegmente nebeneinander liegend gemeinsam eine Prallfläche für das landwirtschaftliche Gut bilden, durch Relativbewegung zueinander in die Transport- und/oder Vorgewendestellung zusammenfahrbar sind, **dadurch gekennzeichnet, dass** die Schildsegmente (11) schwenkbar um Schwenkachsen (15) gelagert sind, die sich quer zu der in der Arbeitsstellung gebildeten Prallfläche erstrecken, sodass die Schildsegmente zumindest näherungsweise in der Ebene des Prallschilds zusammenklappbar sind.

2. Landwirtschaftliche Arbeitsmaschine nach dem vorhergehenden Anspruch, wobei die Schildsegmente (11) als längliche Stäbe ausgebildet sind, die in der Arbeitsstellung ein Prallgitter oder einen Prallkamm bilden.

3. Landwirtschaftliche Arbeitsmaschine nach einem der vorhergehenden Ansprüche, wobei jedes Schildsegment (11) seine eigene Schwenkachse (15) besitzt.

4. Landwirtschaftliche Arbeitsmaschine nach einem der vorhergehenden Ansprüche, wobei die Schwenkachsen (15) entlang einer Linie (20) verteilt angeordnet sind, die sich etwa parallel oder tangential zu einer Hauptachse des Prallschilds (7) in dessen Arbeitsstellung und/oder quer zu den Längsachsen der Schildsegmente (11) in deren Arbeitsstellung erstrecken.

5. Landwirtschaftliche Arbeitsmaschine nach dem vorhergehenden Anspruch, wobei sich die genannte Linie (20), entlang derer die Schwenkachsen (15) angeordnet sind, liegend näherungsweise fahrtrichtungsparallel erstreckt.

6. Landwirtschaftliche Arbeitsmaschine nach einem der vorhergehenden Ansprüche, wobei die Schildsegmente (11) an ihren in der Arbeitsstellung oberen Endabschnitten schwenkbar gelagert sind.

7. Landwirtschaftliche Arbeitsmaschine nach einem der vorhergehenden Ansprüche, wobei die Schildsegmente (11) an einem gemeinsamen Schildträger (13) schwenkbar aufgehängt sind, der sich etwa parallel zu dem Prallschild (7) entlang einem Rand des Prallschilds (7) erstreckt.

8. Landwirtschaftliche Arbeitsmaschine nach einem der vorhergehenden Ansprüche, wobei die Schildsegmente (11) mit einem gemeinsamen Stellteil (17) gelenkig verbunden sind, das von einem Stellaktor (16) zum Verstellen der Schildsegmente (11) verfahrbar ist, wobei der Stellteil (17) sich zumindest näherungsweise parallel zu einem Rand des Prallschilds (7) erstreckt und/oder in der von dem Prallschild (7) aufgespannten Ebene und/oder parallel zu der genannten von dem Prallschild (7) aufgespannten Ebene verfahrbar ist, und/oder sich der Stellteil (17) und der Schildträger (13) parallel zueinander erstrecken und der Stellteil (17) relativ zum Schildträger (13) in einer Ebene, die sich parallel zu dem länglichen Schildträger (13) erstreckt, verfahrbar ist.

9. Landwirtschaftliche Arbeitsmaschine nach einem der vorhergehenden Ansprüche, wobei das zumindest eine Arbeitsaggregat (3,4) aus einer abgesenkten Arbeitsstellung in eine angehobene Vorgewende- und/oder Transportstellung aushebbar ausgebildet ist und eine Steuervorrichtung zum Betätigen des Stellaktors zum Zusammenfahren des Prallschilds (7) automatisch in Abhängigkeit des Aushebens des Arbeitsaggregats (3,4) vorgesehen ist.

10. Landwirtschaftliche Arbeitsmaschine nach dem vorhergehenden Anspruch, wobei die Steuervorrichtung eine hydraulische Koppelung des Stellaktors (16) zum Zusammenfahren des Prallschilds (7) an einen Aushubaktor zum Ausheben des Arbeitsaggregats (3,4) umfasst.

11. Landwirtschaftliche Arbeitsmaschine nach einem der vorhergehenden Ansprüche, wobei der Prallschild (7) in seiner Arbeitsstellung einen Schwadkamm bildet, der von einer nach unten offenen Stabanordnung gebildet ist.

12. Landwirtschaftliche Arbeitsmaschine nach einem der vorhergehenden Ansprüche, wobei zwei Arbeitsaggregate (3, 4) in einer Butterfly-Anordnung vorgesehen sind und von einem zentralen Maschinenrahmen (2) rechts und links auskragend angeordnet sind, wobei der Prallschild (7) zwischen den beiden Arbeitsaggregaten (3, 4) angeordnet ist.

13. Landwirtschaftliche Arbeitsmaschine nach einem der vorhergehenden Ansprüche, wobei das zumindest eine Arbeitsaggregat (3,4) eine Mäheinheit und einen der Mäheinheit nachgeordneten Querförderer (5,6) zum Querfördern des von der Mäheinheit gemähten Ernteguts und Ablegen des Ernteguts in einem Schwad seitlich neben der Fahrspur der Mäheinheit aufweist, wobei der Prallschild (7) im Abwurf- und/oder Ablegebereich des Querförderers (5,6) angeordnet ist und/oder diesen Ablegebereich begrenzt.

14. Landwirtschaftliche Arbeitsmaschine nach einem der vorhergehenden Ansprüche, wobei das zumindest eine Arbeitsaggregat (3,4) eine Schwadeinheit zum Schwaden von Erntegut umfasst.

## Claims

1. Agricultural work machine, in particular a mowing machine with a transverse conveyor and/or haymaking machine for attachment to a tractor with at least one work unit (3, 4) for processing agricultural material as well as an impact shield (7) for limiting the shedding and/or deposition and/or scatter area of the material processed by the work unit (3, 4), wherein the impact shield (7) is designed to be movable between a working position and a transport and/or headland position, wherein the impact shield (7) is divided into several shield segments (11), which are supported movably relative to one another such that the shield segments (11) are collapsible from the working position, in which the shield segments lying adjacent to one another jointly form an impact surface for the agricultural material, by movement relative to one another into the transport and/or headland position, **characterised in that** the shield segments (11) are supported pivotably about pivot axes (15) that extend transversely to the impact surface formed in the working position, so that the shield segments can be folded together at least approximately in the plane of the impact shield.

2. Agricultural work machine according to the preceding claim, wherein the shield segments (11) are designed as elongated bars, which form an impact grid or an impact comb in the working position.

3. Agricultural work machine according to one of the preceding claims, wherein each shield segment (11) has its own pivot axis (15).

4. Agricultural work machine according to one of the preceding claims, wherein the pivot axes (15) are arranged distributed along a line (20) that extends roughly parallel or tangentially to a main axis of the impact shield (7) in its working position and/or transversely to the longitudinal axes of the shield segments (11) in their working position.

5. Agricultural work machine according to the preceding claim, wherein said line (20) along which the pivot axes (15) are arranged extends lying approximately parallel to the direction of travel.

6. Agricultural work machine according to one of the preceding claims, wherein the shield segments (11) are supported pivotably at their end sections at the top in the working position.

7. Agricultural work machine according to one of the preceding claims, wherein the shield segments (11) are suspended pivotably on a common shield carrier (13), which extends roughly parallel to the impact shield (7) along an edge of the impact shield (7).

8. Agricultural work machine according to one of the preceding claims, wherein the shield segments (11) are connected articulately to a common operating element (17), which is movable by an actuator (16) for adjusting the shield segments (11), wherein the operating element (17) extends at least approximately parallel to an edge of the impact shield (7) and/or is movable in the plane spanned by the impact shield (7) and/or parallel to said plane spanned by the impact shield (7), and/or the operating element (17) and the shield carrier (13) extend parallel to one another and the operating element (17) extends relative to the shield carrier (13) in a plane that extends parallel to the elongated shield carrier (13).

9. Agricultural work machine according to one of the preceding claims, wherein the at least one work unit (3, 4) is designed to be liftable out of a lowered working position into a raised headland and/or transport position and a control device is provided for actuating the actuator to collapse the impact shield (7) automatically depending on the lifting of the work unit (3, 4).

10. Agricultural work machine according to the preceding claim, wherein the control device comprises a hydraulic coupling of the actuator (16) for collapsing the impact shield (7) onto a lift actuator for lifting the work unit (3, 4).

11. Agricultural work machine according to one of the preceding claims, wherein the impact shield (7) in its working position forms a swath comb, which is formed by a bar arrangement that is open downwards.

12. Agricultural work machine according to one of the preceding claims, wherein two work units (3, 4) are provided in a butterfly arrangement and are arranged projecting right and left from a central machine frame (2), wherein the impact shield (7) is arranged between the two work units (3, 4).

13. Agricultural work machine according to one of the preceding claims, wherein the at least one work unit (3, 4) has a mowing unit and a transverse conveyor (5, 6) arranged behind the mowing unit for transverse conveying of the harvested material mown by the mowing unit and deposition of the harvested material in a swath laterally adjacent to the travel track of the mowing unit, wherein the impact shield (7) is arranged in the shedding and/or deposition area of the transverse conveyor (5, 6) and/or delimits this deposition area.

14. Agricultural work machine according to one of the preceding claims, wherein the at least one work unit (3, 4) comprises a swath unit for swathing harvested material.

## Revendications

1. Engin agricole, en particulier faucheuse à transporteur transversal et/ou faneuse, destiné à être attelé à un tracteur, comprenant au moins un organe de travail (3, 4) destiné au travail de produits agricoles ainsi qu'un panneau déflecteur (7) pour limiter la zone d'éjection et/ou de dépose et/ou de dispersion des produits travaillés par l'organe de travail (3, 4), le panneau déflecteur (7) étant réalisé de façon à pouvoir passer d'une position de travail à une position de transport et/ou de tournière, le panneau déflecteur (7) étant divisé en plusieurs segments de panneau (11), qui sont montés mobiles les uns par rapport aux autres, de telle manière que les segments de panneau (11) peuvent être regroupés depuis la position de travail, dans laquelle les segments de panneau forment ensemble, placés les uns à côté des autres, une surface déflectrice pour les produits agricoles, dans la position de transport et/ou de tournière par un mouvement relatif entre eux, **caractérisé en ce que** les segments de panneau (11) sont montés pivotants sur des axes de pivotement (15), qui s'étendent transversalement à la surface déflectrice formée dans la position de travail, de telle sorte que les segments de panneau peuvent être rabattus au moins approximativement dans le plan du panneau déflecteur.

2. Engin agricole selon la revendication précédente, dans lequel les segments de panneau (11) sont réalisés sous la forme de barres allongées, qui forment, dans la position de travail, une grille déflectrice ou un peigne déflecteur.

3. Engin agricole selon l'une des revendications précédentes, dans lequel chaque segment de panneau (11) possède son propre axe de pivotement (15).

4. Engin agricole selon l'une des revendications précédentes, dans lequel les axes de pivotement (15) sont disposés répartis le long d'une ligne (20), qui s'étend approximativement parallèlement ou tangentiellement à un axe principal du panneau déflecteur (7) dans sa position de travail et/ou transversalement aux axes longitudinaux des segments de panneau (11) dans leur position de travail.

5. Engin agricole selon la revendication précédente, dans lequel ladite ligne (20), le long de laquelle sont disposés les axes de pivotement (15), s'étend horizontalement, approximativement parallèlement au sens de la marche.

6. Engin agricole selon l'une des revendications précédentes, dans lequel les segments de panneau (11) sont montés pivotants sur leurs parties d'extrémité supérieures dans la position de travail.

7. Engin agricole selon l'une des revendications précédentes, dans lequel les segments de panneau (11) sont suspendus pivotants sur un support de panneau (13) commun, qui s'étend approximativement parallèlement au panneau déflecteur (7) le long d'un bord du panneau déflecteur (7).

8. Engin agricole selon l'une des revendications précédentes, dans lequel les segments de panneau (11) sont reliés de manière articulée à un organe de commande (17) commun, qui peut être déplacé par un actionneur de réglage (16) pour le réglage des segments de panneau (11), l'organe de commande (17) s'étendant au moins approximativement parallèlement à un bord du panneau déflecteur (7) et/ou pouvant être déplacé dans le plan défini par le panneau déflecteur (7) et/ou parallèlement audit plan défini par le panneau déflecteur (7), et/ou l'organe de commande (17) et le support de panneau (13) s'étendant parallèlement l'un à l'autre et l'organe de commande (17) pouvant être déplacé par rapport au support de panneau (13) dans un plan, qui s'étend parallèlement au support de panneau (13) oblong.

9. Engin agricole selon l'une des revendications précédentes, dans lequel l'au moins un organe de travail (3, 4) est réalisé soulevable d'une position abaissée de travail à une position relevée de tournière et/ou de transport et un dispositif de commande étant prévu pour actionner l'actionneur de réglage pour regrouper le panneau déflecteur (7) automatiquement en fonction du soulèvement de l'organe de travail (3, 4).

10. Engin agricole selon la revendication précédente, dans lequel le dispositif de commande comprend un couplage hydraulique de l'actionneur de réglage (16) pour le regroupement du panneau déflecteur (7) à un actionneur de soulèvement pour soulever l'organe de travail (3, 4).

11. Engin agricole selon l'une des revendications précédentes, dans lequel le panneau déflecteur (7) forme, dans sa position de travail, un peigne andaineur, qui est formé par un agencement de barres ouvert vers le bas.

12. Engin agricole selon l'une des revendications précédentes, dans lequel deux organes de travail (3, 4) sont prévus dans un agencement en papillon et sont disposés en porte-à-faux à droite et à gauche d'un bâti de machine (2) central, le panneau déflecteur (7) étant disposé entre les deux organes de travail (3, 4).

13. Engin agricole selon l'une des revendications précédentes, dans lequel l'au moins un organe de travail (3, 4) comporte un ensemble faucheuse et un transporteur transversal (5, 6) disposé en aval de l'ensemble faucheuse pour le transport transversal de la récolte fauchée par l'ensemble faucheuse et pour déposer la récole dans un andain latéralement à côté de la voie de circulation de l'ensemble faucheuse, le panneau déflecteur (7) étant disposé dans la zone de d'éjection et/ou de dépose du transporteur transversal (5, 6) et/ou limitant cette zone de dépose.

14. Engin agricole selon l'une des revendications précédentes, dans lequel l'au moins un organe de travail (3, 4) comprend un ensemble andaineur pour l'andainage de la récolte.
